# EUROPEAN PATENT APPLICATION

(11) **EP 3 745 489 A1**
(43) Date of publication of application: **02.12.2020**
(21) Application number: 18904530.5
(22) Date of filing: 31.08.2018
(51) Int. Cl.: H01M 2/10, H01M 10/617, H01M 10/627

(54) **POLE-HELD POWER SUPPLY**

(30) Priority: 09.02.2018 CN 201810140896
(71) Applicant: HUAWEI TECHNOLOGIES CO., LTD., Shenzhen, Guangdong 518129 (CN)
(72) Inventor: ZHAO, Zhongling, Shenzhen, Guangdong 518129 (CN); JIA, Yingfeng, Shenzhen, Guangdong 518129 (CN); ZHANG, Guanghui, Shenzhen, Guangdong 518129 (CN)
(74) Representative: Maiwald Patent- und Rechtsanwaltsgesellschaft mbH
(86) International application number: PCT/CN2018/103689
(87) International publication number: WO 2019/153729

(57) **Abstract**

This application discloses a pole-mounted power supply. The pole-mounted power supply includes an annular tank to be mounted on a support pole, there is a cylindrical cavity at a center of the annular tank, the cylindrical cavity is configured to encircle the support pole, a plurality of electrochemical cells are evenly disposed in the annular tank, and a center of gravity of the pole-mounted power supply is located on a cross section of the support pole when the pole-mounted power supply is mounted on the support pole. Through implementation of embodiments of the present invention, stability of the pole-mounted power supply can be improved, and a problem of local overheating caused by inconsistent heat dissipation between electrochemical cells in the pole-mounted power supply is avoided, thereby prolonging use of the pole-mounted power supply.

## Description

### TECHNICAL FIELD

The present invention relates to the field of power supply technologies, and in particular, to a pole-mounted power supply.

### BACKGROUND

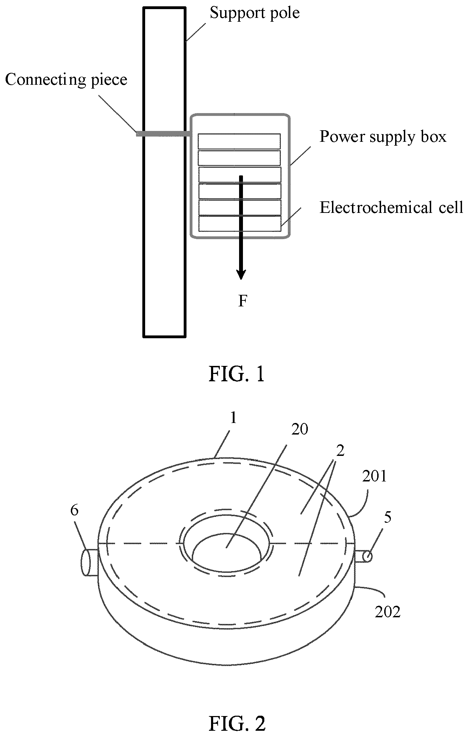

Currently, with the gradual popularization and commercial use of 4G/5G and the development of network technologies such as the Internet of Things and self-driving, there is a very large demand for a pole-mounted secondary power supply (a pole-mounted power supply for short) used to supply power to a radio frequency transmitter, a camera, a signal light, and the like. In an outdoor environment, an existing pole-mounted power supply is usually designed as a square, and is mounted on a side face of a support pole (such as a utility pole). As shown in FIG. 1, the pole-mounted power supply includes a square power supply box and a component such as an electrochemical cell arranged in the power supply box, and is hung on the side face of the support pole after being mounted by using a connecting piece. However, because the pole-mounted power supply is usually relatively heavy, such a designing and mounting manner has disadvantages such as an unstable center of gravity and a large frontal area. Especially in severe weather, the pole-mounted power supply has a risk of falling, and stability is relatively poor. In addition, in the power supply box of the square pole-mounted power supply, arrangement of electrochemical cells is usually similar to a conventional electrochemical cell arrangement manner. To be specific, a plurality of groups of electrochemical cells are used in parallel, and the plurality of groups of electrochemical cells are arranged together in a form of close arrangement in a stack. However, in this arrangement manner, heat dissipation between the electrochemical cells is not even, a temperature difference between the electrochemical cells is large, and in a battery charging and discharging process, local overheating is easily caused. Consequently, performance and a service life of a local electrochemical cell are reduced, and a security risk problem is even easily caused due to local overheating.

### SUMMARY

Embodiments of the present invention provide a pole-mounted power supply, so that stability of the pole-mounted power supply can be improved, and a problem of local overheating caused by inconsistent heat dissipation between electrochemical cells in the pole-mounted power supply is avoided, thereby prolonging a service life of the pole-mounted power supply.

According to a first aspect, an embodiment of the present invention provides a pole-mounted power supply. The pole-mounted power supply includes an annular tank to be mounted on a support pole, there is a cylindrical cavity at a center of the annular tank, the cylindrical cavity is configured to encircle the support pole, a plurality of electrochemical cells are evenly disposed in the annular tank, and a center of gravity of the pole-mounted power supply is located on a cross section of the support pole when the pole-mounted power supply is mounted on the support pole. Specifically, in the annular tank, centers of gravity of the plurality of electrochemical cells are evenly distributed around a center line of the cylindrical cavity. In this way, when the pole-mounted power supply is mounted on the support pole, the center of gravity (F) of the pole-mounted power supply is located on the cross section of the support pole. In a possible embodiment, the center of gravity of the pole-mounted power supply even can be located at a center of the cross section of the support pole. The cross section is located inside the support pole, and the cross section is perpendicular to the center line of the cylindrical cavity.

It can be learned that, in this embodiment of the present invention, the pole-mounted power supply is designed as the annular tank having the cylindrical cavity at the center, so that the pole-mounted power supply can encircle the support pole after being mounted on the support pole. In addition, because the plurality of electrochemical cells of the pole-mounted power supply are evenly arranged in the annular tank, the center of gravity of the pole-mounted power supply can be located on the cross section (even the center) of the support pole. Therefore, through implementation of this embodiment of the present invention, stability of the pole-mounted power supply can be improved. In addition, because the electrochemical cells are evenly distributed, surrounding environments of all the electrochemical cells are basically consistent, and therefore, heat dissipation situations of all the electrochemical cells are also basically consistent, thereby avoiding a problem of local overheating caused by inconsistent heat dissipation between the electrochemical cells, and prolonging a service life of the pole-mounted power supply.

In an implementation of the present invention, the annular tank is divided into two semi-circular columnar structures, a movable hinge is disposed at a first junction of the two semi-circular columnar structures, and the two semi-circular columnar structures are movably connected by using the movable hinge. An adjustable fastening structure is disposed at a second junction of the two semi-circular columnar structures, and when the two semi-circular columnar structures are closed into the annular tank by using the movable hinge, the adjustable fastening structure is configured to lock the annular tank.

In this embodiment of the present invention, that a plurality of electrochemical cells are evenly disposed in the annular tank is specifically: in the annular tank, centers of gravity of the plurality of electrochemical cells are evenly distributed around the center line of the cylindrical cavity. Specifically, the plurality of electrochemical cells in internal space of the annular tank have various arrangement manners.

In a possible arrangement manner, a plurality of square electrochemical cells or soft-package electrochemical cells (for example, 16 square electrochemical cells) are arranged in the internal space of the annular tank, each electrochemical cell has an electrochemical cell tab, the electrochemical cell tab is arranged upwards on a surface of the electrochemical cell, and busbars of electrochemical cell tabs of different electrochemical cells are connected by using a soft connection (for example, a wire connection) or a hard connection (for example, a copper sheet connection). Centers of gravity of these electrochemical cells are evenly distributed around the center line of the cylindrical cavity of the annular tank. Specifically, these electrochemical cells are radially distributed in the internal space around the center line of the cylindrical cavity. A maximum cross section of each electrochemical cell is coplanar with the center line of the cylindrical cavity. An included angle between respective maximum cross sections of adjacent electrochemical cells is 22.5°, and a sum of these included angles is 360°. In a possible embodiment, n layers of pole-mounted power supplies may be designed based on an actual power consumption requirement. In this case, it may be understood that a sum of included angles 7 of all the pole-mounted power supplies is n times 360°, where n is an integer greater than or equal to 1.

In another possible arrangement manner, a plurality of square electrochemical cells or soft-package electrochemical cells (for example, eight square electrochemical cells) are arranged in the internal space of the annular tank, each electrochemical cell has an electrochemical cell tab, the electrochemical cell tab is arranged upwards on a surface of the electrochemical cell, and busbars of electrochemical cell tabs of different electrochemical cells are connected by using a soft connection (for example, a wire connection) or a hard connection (for example, a copper sheet connection). Specifically, these electrochemical cells are distributed in the internal space around the center line of the cylindrical cavity in a rotary (or helical) manner, and a maximum cross section of the electrochemical cell is not coplanar with the center line of the cylindrical cavity. An included angle between respective maximum cross sections of adjacent electrochemical cells is 45°, and a sum of these included angles is 360°. In a possible embodiment, n layers of pole-mounted power supplies may be designed based on an actual power consumption requirement. In this case, it may be understood that a sum of included angles 16 of all the pole-mounted power supplies is n times 360°, where n is an integer greater than or equal to 1.

In still another possible arrangement manner, a plurality of cylindrical electrochemical cells (for example, 64 electrochemical cells) are arranged in the internal space of the annular tank, each electrochemical cell has an electrochemical cell tab, the electrochemical cell tab is arranged upwards on a surface of the electrochemical cell, and busbars of electrochemical cell tabs of different electrochemical cells are connected by using a soft connection (for example, a wire connection) or a hard connection (for example, a copper sheet connection). Centers of gravity of these electrochemical cells are evenly distributed around the center line of the cylindrical cavity of the annular tank. Specifically, a center line of each cylindrical electrochemical cell is parallel to the center line of the cylindrical cavity. These electrochemical cells are radially distributed in the internal space around the center line of the cylindrical cavity, and one group of electrochemical cells are evenly disposed on each radial line. An included angle between a plane constituted by a center line of a group of electrochemical cells on a same radial line and the center line of the cylindrical cavity and a plane constituted by a center line of a group of electrochemical cells on adjacent radial lines and the center line of the cylindrical cavity is 22.5°, and a sum of these included angles 16 is 360°.

In a possible embodiment, n layers of pole-mounted power supplies may be designed based on an actual power consumption requirement. In this case, it may be understood that a sum of included angles of all the pole-mounted power supplies is n times 360°, where n is an integer greater than or equal to 1.

In addition, in this embodiment of the present invention, the pole-mounted power supply may be mounted on the support pole in various manners. Before mounting, the movable hinge is in a movable connection state, and after mounting, the movable hinge is fixedly fastened to the adjustable fastening structure on the other end. The pole-mounted power supply may be fastened to the support pole based on a structure of the pole-mounted power supply, or may be fastened to the support pole by using a peripheral upper base component and a peripheral lower base component.

In a possible mounting manner, the cylindrical cavity may be configured to clamp the support pole. When the pole-mounted power supply is mounted on the support pole, the adjustable fastening structure is fastened, so that a cavity wall of the cylindrical cavity can be in close contact with the support pole. In other words, when the pole-mounted power supply is mounted on the support pole, a radius of the cylindrical cavity is equal to a radius of a mounting position of the support pole. In this way, the pole-mounted power supply can be fastened to the support pole by using friction between the cavity wall and the support pole.

In another possible mounting manner, the pole-mounted power supply may be fastened to the support pole by using a peripheral component. For example, an angle steel is disposed on each of two ends of the cylindrical cavity of the annular tank of the pole-mounted power supply (in other words, the angle steel is disposed on each of a top edge and a bottom edge of a cavity part of each semi-circular columnar structure). When the pole-mounted power supply needs to be mounted on the support pole, one side of the angle steel is fixedly connected to the annular tank, and the other side of the angle steel is in close contact with the support pole. Angle steels on top edges of cavity parts of the two semi-circular columnar structures are separately set to be connected by using fastening studs, and angle steels on bottom edges of the cavity parts of the two semi-circular columnar structures are also separately set to be connected by using fastening studs. In this way, after being mounted, the pole-mounted power supply may also be fastened to the support pole by using a peripheral component.

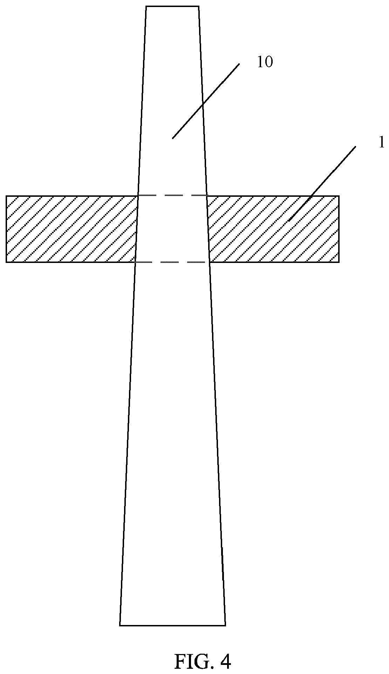

In another application case, the support pole is not standardized, and the support pole has different diameters. Actually, regardless of a change of the support pole, at least one second support pole with a standard diameter may be connected. In this case, the pole-mounted power supply may also be mounted on the second support pole. In this case, an equivalent effect is achieved. In still another application case, there are uneven diameters on a top part and a bottom part of the support pole. Generally, the diameter gradually decreases from bottom to top. In this case, a ring in the middle of the pole-mounted power supply may also be gradient, so that the ring can be naturally fastened on the pole (FIG. 4) based on gravity. In another possible case, a ring in the middle of the pole-mounted power supply is not got through, and an upper side is closed. In this case, the pole-mounted power supply may be fastened to the top of the support pole.

In specific implementation, in addition to the electrochemical cells, other conventional power auxiliary components such as a power management system (Battery Management System, BMS), a busbar, a heating film, and a necessary reinforcing piece are disposed in the annular tank in this embodiment of the present invention. These power auxiliary components are located between the electrochemical cells, or located on an upper part of the electrochemical cell, or located on a lower part of the electrochemical cell, or located on a surface of the electrochemical cell. This is not specifically limited herein.

It can be learned that, in the embodiments of the present invention, the pole-mounted power supply is designed as the annular tank having the cylindrical cavity at the center, so that the pole-mounted power supply can encircle the support pole after being mounted on the support pole. In addition, because the plurality of electrochemical cells of the pole-mounted power supply may be evenly arranged in the annular tank in a plurality of deployment manners, the center of gravity of the pole-mounted power supply can be located on the cross section (even the center) of the support pole. Therefore, through implementation of the embodiments of the present invention, stability of the pole-mounted power supply can be improved, and impact from severe weather is avoided. In addition, because the electrochemical cells are evenly distributed, surrounding environments of all the electrochemical cells are basically consistent, and working temperature is also consistent, so that it is ensured that temperature between the electrochemical cells is consistent, in other words, heat dissipation situations of all the electrochemical cells are basically consistent, thereby avoiding a problem of local overheating caused by inconsistent heat dissipation between the electrochemical cells, and prolonging the service life of the pole-mounted power supply. In addition, it can be learned from the plurality of deployment manners of the electrochemical cells described above that the pole-mounted power supply provided in the embodiments of the present invention has relatively strong expandability, can be widely applicable to an application scenario with increasing requirements for an electric quantity such as a 5G scenario, and has relatively strong applicability.

### BRIEF DESCRIPTION OF DRAWINGS

To describe the technical solutions in the embodiments of the present invention or in the background more clearly, the following briefly describes the accompanying drawings required for describing the embodiments of the present invention or the background.
FIG. 1 is a schematic diagram of an application scenario of a pole-mounted power supply in the prior art;
FIG. 2 is a schematic structural diagram of a pole-mounted power supply according to an embodiment of the present invention;
FIG. 3 is a schematic diagram of an application scenario of a pole-mounted power supply according to an embodiment of the present invention;
FIG. 4 is a schematic diagram of a mounting manner of a pole-mounted power supply according to an embodiment of the present invention;
FIG. 5 is a schematic diagram of a mounting manner of another pole-mounted power supply according to an embodiment of the present invention;
FIG. 6 is a schematic structural diagram of another pole-mounted power supply according to an embodiment of the present invention;
FIG. 7 is a schematic diagram of an application scenario of an opening and closing scenario of a pole-mounted power supply according to an embodiment of the present invention;
FIG. 8 is a schematic structural diagram of still another pole-mounted power supply according to an embodiment of the present invention; and
FIG. 9 is a schematic structural diagram of yet another pole-mounted power supply according to an embodiment of the present invention.

### DESCRIPTION OF EMBODIMENTS

The following describes the embodiments of the present invention with reference to the accompanying drawings in the embodiments of the present invention. Terms used in implementations of the present invention are merely used to explain specific embodiments of the present invention, and are not intended to limit the present invention.

Referring to FIG. 2, an embodiment of the present invention provides a ring-shaped columnar pole-mounted power supply. As shown in FIG. 2, the ring-shaped columnar pole-mounted power supply includes an annular tank 1 to be mounted on a support pole (for example, a column such as a street lamp), a plurality of electrochemical cells (not shown in FIG. 2) disposed in internal space 2 of the annular tank 1, and a movable hinge 5 and a fastening structure 6 that are disposed on the annular tank 1. There is a cylindrical cavity 20 at a center of the annular tank 1, and the cylindrical cavity 20 may be configured to encircle the support pole. The plurality of electrochemical cells are evenly and symmetrically arranged in the internal space 2 of the annular tank 1 (this is described in detail below). In this way, when the pole-mounted power supply is mounted on the support pole, a center of gravity of the pole-mounted power supply can be located inside the support pole. In other words, the support pole is vertically disposed on the ground, and when the pole-mounted power supply is mounted on the support pole, the center of gravity of the pole-mounted power supply is located on a cross section of the support pole. The cross section is located inside the support pole, and the cross section is perpendicular to a center line of the cylindrical cavity 20.

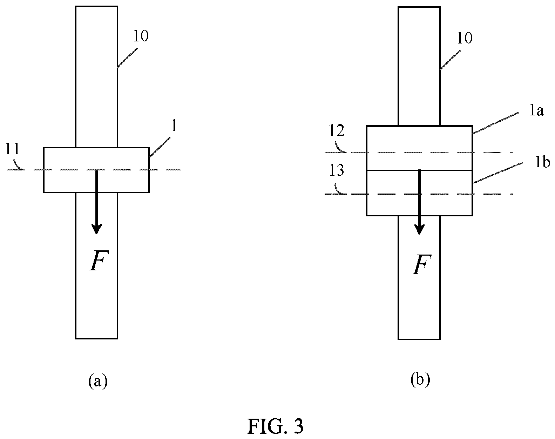

Specifically, in the annular tank 1, centers of gravity of the plurality of electrochemical cells are evenly distributed around the center line of the cylindrical cavity 20. In this way, as shown in (a) in FIG. 3, when the pole-mounted power supply (indicated by the annular tank 1) is mounted on a support pole 10, the center of gravity (F) of the pole-mounted power supply is located on a cross section 11 of the support pole 10. In a possible embodiment, the center of gravity of the pole-mounted power supply even can be located at a center of the cross section 11 of the support pole 10.

In this embodiment of the present invention, the movable hinge 5 and the fastening structure 6 are disposed on the annular tank 1 of the pole-mounted power supply, and the annular tank may be divided into two semi-circular columnar structures (201 and 202). The movable hinge 5 is disposed at a junction (an overlapping position) of ends of the two semi-circular columnar structures, and the two semi-circular columnar structures are movably connected by using the movable hinge 5. The adjustable fastening structure 6 is disposed at a junction (an overlapping position) of the other ends of the two semi-circular columnar structures, and when the two semi-circular columnar structures are closed into the annular tank 1 by using the movable hinge 5, the adjustable fastening structure 6 is configured to lock the annular tank 1. Because the pole-mounted power supply (the annular tank 1) can be opened into the two semi-circular columnar structures based on the movable hinge 5, it is convenient to arrange the electrochemical cells in the corresponding internal space 2, and it is convenient to mount the pole-mounted power supply on the support pole.

In a possible application scenario, the pole-mounted power supply provided in this embodiment of the present invention may be designed as a multi-layer combination form based on a requirement. For example, as shown in (b) in FIG. 3, in a combination form, the pole-mounted power supply may be designed as two layers: a top layer and a bottom layer, and the layers each include a ring-shaped columnar pole-mounted power supply shown in FIG. 2: a pole-mounted power supply 1a and 1 pole-mounted power supply 1b. It may be understood that, a center of gravity of the pole-mounted power supply 1a is located on a cross section 12 of the support pole 10, and a center of gravity of the pole-mounted power supply 1b is located on a cross section 13 of the support pole 10. Therefore, an overall center of gravity of the pole-mounted power supply is still located on the cross section of the support pole 10 and even at a center.

It should be noted that, in addition to the electrochemical cells, other conventional power auxiliary components such as a power management system (Battery Management System, BMS), a busbar, a heating film, and a necessary reinforcing piece are disposed in the annular tank 1 in this embodiment of the present invention. These power auxiliary components are located between the electrochemical cells, or located on an upper part of the electrochemical cell, or located on a lower part of the electrochemical cell, or located on a surface of the electrochemical cell. This is not specifically limited herein. Regardless of an arrangement manner, because total weight of the electrochemical cells is a main part of weight of the pole-mounted power supply, the center of gravity of the ring-shaped columnar pole-mounted power supply in this embodiment of the present invention can be kept on the cross section of the support pole 10.

In this embodiment of the present invention, the pole-mounted power supply may be mounted on the support pole 10 in various manners. Before mounting, the movable hinge 5 is in a movable connection state, and after mounting, the movable hinge 5 is fixedly fastened to the adjustable fastening structure 6 on the other end. The pole-mounted power supply may be fastened to the support pole 10 based on a structure of the pole-mounted power supply, or may be fastened to the support pole 10 by using a peripheral upper base component and a peripheral lower base component.

Referring to FIG. 4, in a possible embodiment, the cylindrical cavity 20 may be configured to clamp the support pole 10. When the pole-mounted power supply (the annular tank 1) is mounted on the support pole 10, the adjustable fastening structure 6 is fastened, so that a cavity wall of the cylindrical cavity 20 can be in close contact with the support pole 10. In other words, when the pole-mounted power supply is mounted on the support pole 10, a radius of the cylindrical cavity 20 is equal to a radius of a mounting position of the support pole 10. In this way, the pole-mounted power supply can be fastened to the support pole 10 by using friction between the cavity wall and the support pole 10. It may be understood that, such a form of clamping the support pole is not only applicable to fastening of the pole-mounted power supply on a cylindrical support pole 10, but also applicable to fastening of the pole-mounted power supply on a non-cylindrical (with a variant cross section) support pole 10.

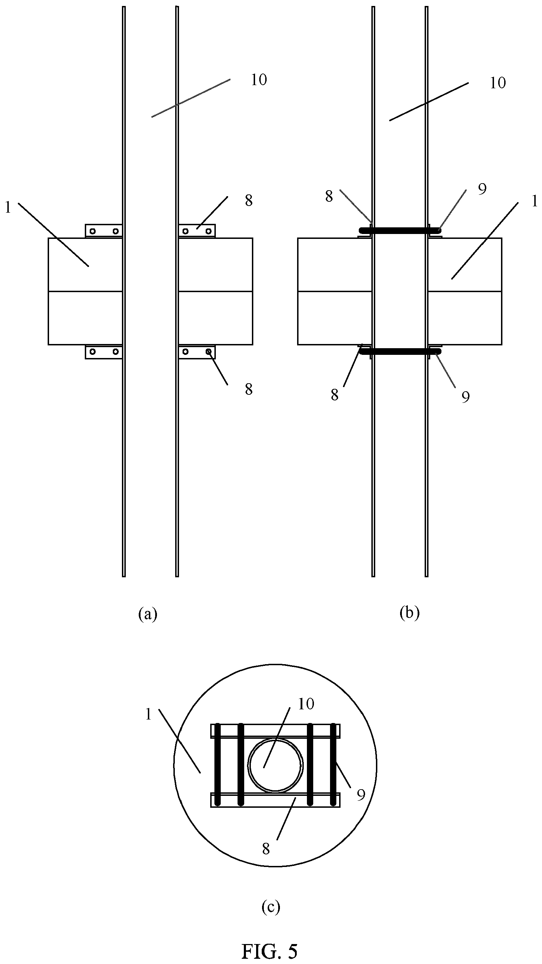

Referring to (a) to (c) in FIG. 5, in another possible embodiment, the pole-mounted power supply may be fastened to the support pole 10 by using a peripheral component. As shown in FIG. 5, an angle steel 8 is disposed on each of two ends of the cylindrical cavity 20 of the annular tank 1 of the pole-mounted power supply (in other words, the angle steel 8 is disposed on each of a top edge and a bottom edge of a cavity part of each semi-circular columnar structure). When the pole-mounted power supply needs to be mounted on the support pole 10, one side of the angle steel 8 is fixedly connected to the annular tank 1 (the angle steel 8 is fastened to form an upper fastening base and a lower fastening base), and the other side of the angle steel 8 is in close contact with the support pole 10. Angle steels 8 on top edges of cavity parts of the two semi-circular columnar structures are separately set to be connected by using fastening studs 9, and angle steels 8 on bottom edges of the cavity parts of the two semi-circular columnar structures are also separately set to be connected by using fastening studs 9. In this way, after being mounted, the pole-mounted power supply may be fastened to the support pole 10 by using a peripheral component.

It should be noted that, to make the pole-mounted power supply more fastened to the support pole 10, in a specific application scenario, there may be a plurality of fastening studs 9 between the angle steels 8 disposed on the top edge of the cavity part, and there may be a plurality of fastening studs 9 between the angle steels 8 disposed on the bottom edge of the cavity part. As shown in c in FIG. 5, there may be four fastening studs 9 between the angle steels 8 disposed on the top (bottom) edge of the cavity part, and the four fastening studs 9 are separately connected between the angle steels 8, thereby fastening the pole-mounted power supply on the support pole 10.

It may be understood that, during specific implementation, the radius of the cylindrical cavity 20 (in other words, an inner diameter of the annular tank 1) is not less than a radius of the encircled cross section of the support pole, and height of the annular tank 1 is not less than height of the electrochemical cells disposed inside the annular tank 1.

It can be learned that, in this embodiment of the present invention, the pole-mounted power supply is designed as the annular tank having the cylindrical cavity at the center, so that the pole-mounted power supply can encircle the support pole after being mounted on the support pole. In addition, because the plurality of electrochemical cells of the pole-mounted power supply are evenly arranged in the annular tank, the center of gravity of the pole-mounted power supply can be located on the cross section (even the center) of the support pole. Therefore, through implementation of this embodiment of the present invention, stability of the pole-mounted power supply can be improved. In addition, because the electrochemical cells are evenly distributed, surrounding environments of all the electrochemical cells are basically consistent, and therefore, heat dissipation situations of all the electrochemical cells are also basically consistent, thereby avoiding a problem of local overheating caused by inconsistent heat dissipation between the electrochemical cells, and prolonging a service life of the pole-mounted power supply.

An arrangement manner of the plurality of electrochemical cells in the internal space 2 of the annular tank 1 is described in detail below.

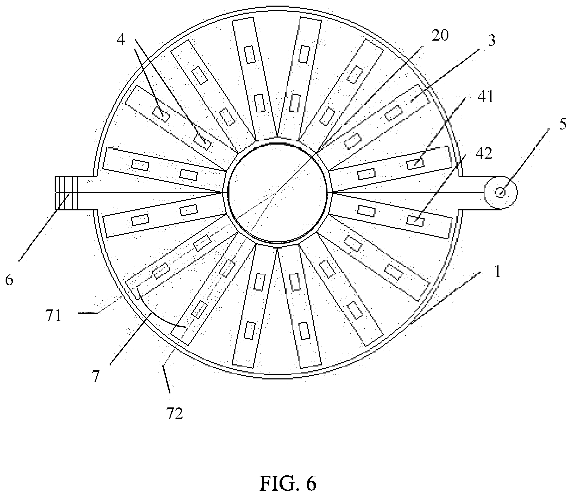

In a possible electrochemical cell arrangement manner, FIG. 6 is a top view of a pole-mounted power supply according to an embodiment of the present invention. As shown in FIG. 6, a plurality of electrochemical cells 3 (in the figure, 16 electrochemical cells 3) are arranged in internal space 2 of an annular tank 1, each electrochemical cell 3 has an electrochemical cell tab 4, the electrochemical cell tab is arranged upwards on a surface of the electrochemical cell, and busbars of electrochemical cell tabs of different electrochemical cells are connected by using a soft connection (for example, a wire connection) or a hard connection (for example, a copper sheet connection). To facilitate opening and closing of the annular tank 1, electrochemical cell tabs 41 and 42 of adjacent electrochemical cells near the movable hinge 5 are connected by using a soft connection, and similarly, electrochemical cell tabs near the adjustable fastening structure 6 are also connected by using a soft connection. Centers of gravity of these electrochemical cells are evenly distributed around a center line of a cylindrical cavity 20 of the annular tank 1. Specifically, these electrochemical cells are square electrochemical cells or soft-package electrochemical cells, and these electrochemical cells are radially distributed in the internal space 2 around the center line of the cylindrical cavity 20. A maximum cross section (indicated by 71 or 72) of each electrochemical cell is coplanar with the center line of the cylindrical cavity 20. An included angle between respective maximum cross sections (for example, between 71 and 72) of adjacent electrochemical cells is an included angle 7 shown in the figure. Because the electrochemical cells are evenly distributed around a center line of the support pole, the included angle 7 between the electrochemical cells is 22.5°, and a sum of included angles 7 is 360°.

In a possible embodiment, n layers of pole-mounted power supplies may be arranged based on an actual power consumption requirement with reference to a form in (b) in FIG. 3. In this case, it may be understood that a sum of included angles 7 of all the pole-mounted power supplies is n times 360°, where n is an integer greater than or equal to 1.

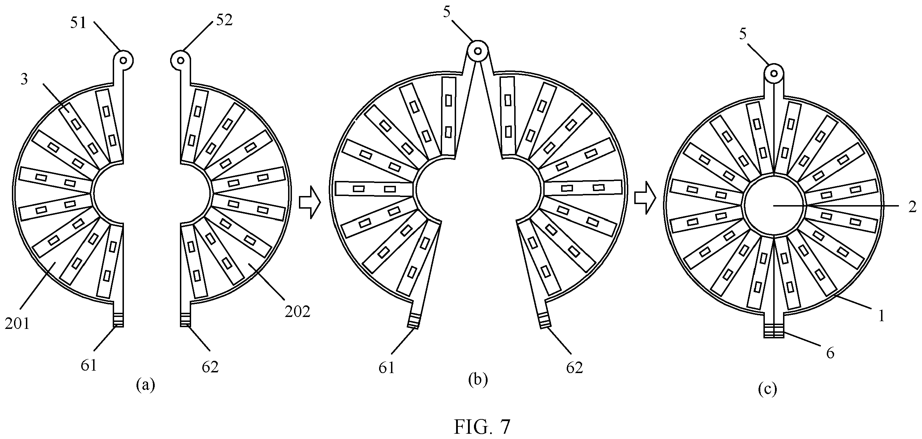

An opening state and a closed state of the ring-shaped columnar pole-mounted power supply are further described below. Referring to (a) to (c) in FIG. 7, (a) in FIG. 7 is a top view showing that the pole-mounted power supply is divided into two semi-circular columnar structures, (b) in FIG. 7 is a top view of an opening state of the pole-mounted power supply, and (c) in FIG. 7 is a top view of a closed state of the pole-mounted power supply.

As shown in (a) in FIG. 7, the annular tank of the pole-mounted power supply includes two semi-circular columnar structures 202 and 202 through combination. A constituent structure 51 of the movable hinge 5 is disposed on one end of the semi-circular columnar structure 201, a constituent structure 52 of the movable hinge 5 is disposed on one end of the semi-circular columnar structure 202, and the constituent structure 51 and the constituent structure 52 may form a hinge structure 5 by using a movable connection, so that the two semi-circular columnar structures 201 and 202 are movably connected by using the movable hinge 5. In addition, a constituent structure 61 of the adjustable fastening structure 6 is disposed on the other end of the semi-circular columnar structure 201, a constituent structure 62 of the adjustable fastening structure 6 is disposed on the other end of the semi-circular columnar structure 202, and the constituent structure 61 and the constituent structure 62 may overlap, and are adjustably fastened by using a relevant component, to form the adjustable fastening structure 6. For example, after overlapping, the constituent structure 61 and the constituent structure 62 form a stud, and the stud may be adjustably fastened by using a nut, to form the adjustable fastening structure 6. The adjustable fastening structure 6 is configured to lock the annular tank 1.

As shown in (b) and (c) in FIG. 7, the pole-mounted power supply (the annular tank 1) may be opened into two semi-circular columnar structures 201 and 202 based on the movable hinge 5, so that it is convenient to arrange the electrochemical cells in internal space corresponding to 201 and internal space corresponding to 202. A half quantity of electrochemical cells 3 may be disposed in each of the two semi-circular columnar structures 201 and 202 (each has eight groups of electrochemical cells in the figure). In addition, it is also convenient to mount the pole-mounted power supply on the support pole from opened interspace. When the pole-mounted power supply is mounted on the support pole, the two semi-circular columnar structures 201 and 202 are closed, and in this case, the cylindrical cavity 20 encircles the support pole. Then, the adjustable fastening structure 6 is locked, and in this case, the pole-mounted power supply may be fastened to the support pole in a manner shown in the embodiment in FIG. 4 or FIG. 5.

It may be understood that, in addition to these electrochemical cells 3, other conventional power auxiliary components such as a BMS, a busbar, a heating film, and a necessary reinforcing piece are arranged in the annular tank 1 in this embodiment of the present invention. These power auxiliary components are located between the electrochemical cells, or located on an upper part of the electrochemical cell, or located on a lower part of the electrochemical cell, or located on a surface of the electrochemical cell. In addition, it may be further understood that an angle steel 8, a fastening stud 9, and the like may be further disposed outside the annular tank 1, and this is not specifically limited herein.

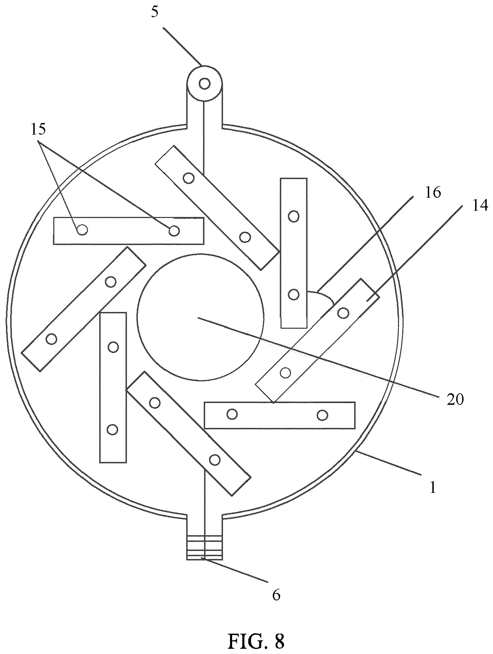

In another possible electrochemical cell arrangement manner, FIG. 8 is a top view of another pole-mounted power supply according to an embodiment of the present invention. As shown in FIG. 8, a plurality of electrochemical cells 14 (in the figure, 8 electrochemical cells 3) are arranged in internal space 2 of an annular tank 1, each electrochemical cell 14 has an electrochemical cell tab 15, the electrochemical cell tab 15 is arranged upwards on a surface of the electrochemical cell, and busbars of electrochemical cell tabs of different electrochemical cells are connected by using a soft connection (for example, a wire connection) or a hard connection (for example, a copper sheet connection). To facilitate opening and closing of the annular tank 1, electrochemical cell tabs of adjacent electrochemical cells near the movable hinge 5 and the adjustable fastening structure 6 are connected by using a soft connection. Centers of gravity of these electrochemical cells are evenly distributed around a center line of a cylindrical cavity 20 of the annular tank 1. Specifically, these electrochemical cells are square electrochemical cells or soft-package electrochemical cells, and these electrochemical cells are distributed in the internal space 2 around the center line of the cylindrical cavity 20 in a rotary (or helical) manner, and a maximum cross section of the electrochemical cell is not coplanar with the center line of the cylindrical cavity 20. An included angle between respective maximum cross sections of adjacent electrochemical cells is an included angle 16 shown in the figure. Because the electrochemical cells are evenly distributed around a center line of the support pole, the included angle 16 between the electrochemical cells is 45°, and a sum of included angles 16 is 360°.

In a possible embodiment, n layers of pole-mounted power supplies may be arranged based on an actual power consumption requirement with reference to a form in (b) in FIG. 3. In this case, it may be understood that a sum of included angles 16 of all the pole-mounted power supplies is n times 360°, where n is an integer greater than or equal to 1.

Similarly, such a ring-shaped columnar pole-mounted power supply may also be divided into two semi-circular columnar structures (not shown in the figure), and the two semi-circular columnar structures may be opened and closed based on the movable hinge 5. When the two semi-circular columnar structures are closed, the adjustable fastening structure 6 is configured to lock the pole-mounted power supply. For a specific implementation, refer to related descriptions in the embodiment in FIG. 7. Details are not described herein again.

It may be understood that, in addition to these electrochemical cells 3, other conventional power auxiliary components such as a BMS, a busbar, a heating film, and a necessary reinforcing piece are arranged in the annular tank 1 in this embodiment of the present invention. These power auxiliary components are located between the electrochemical cells, or located on an upper part of the electrochemical cell, or located on a lower part of the electrochemical cell, or located on a surface of the electrochemical cell. In addition, it may be further understood that an angle steel 8, a fastening stud 9, and the like may be further disposed outside the annular tank 1, and this is not specifically limited herein.

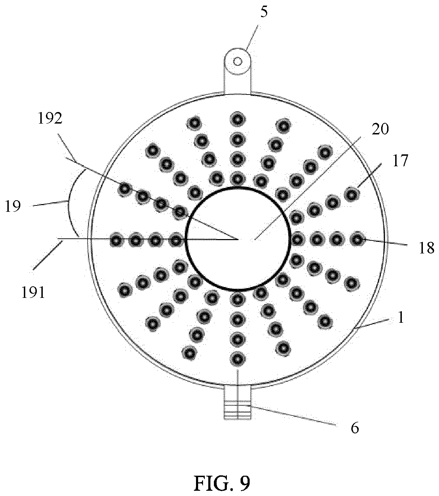

In still another possible electrochemical cell arrangement manner, FIG. 9 is a top view of another pole-mounted power supply according to an embodiment of the present invention. As shown in FIG. 9, a plurality of electrochemical cells 17 (in the figure, 64 electrochemical cells 17) are arranged in internal space 2 of an annular tank 1, each electrochemical cell 17 has an electrochemical cell tab 18, the electrochemical cell tab 18 is arranged upwards on a surface of the electrochemical cell, and busbars of electrochemical cell tabs of different electrochemical cells are connected by using a soft connection (for example, a wire connection) or a hard connection (for example, a copper sheet connection). To facilitate opening and closing of the annular tank 1, electrochemical cell tabs of adjacent electrochemical cells near the movable hinge 5 and the adjustable fastening structure 6 are connected by using a soft connection. Centers of gravity of these electrochemical cells are evenly distributed around a center line of a cylindrical cavity 20 of the annular tank 1. Specifically, these electrochemical cells are cylindrical electrochemical cells. A center line of each cylindrical electrochemical cell is parallel to the center line of the cylindrical cavity 20. These electrochemical cells are radially distributed in the internal space 2 around the center line of the cylindrical cavity 20, and one group of electrochemical cells (in the figure, one group of electrochemical cells include four electrochemical cells) are disposed on each radial line. As shown in the figure, a plane constituted by a center line of a group of electrochemical cells on a same radial line and the center line of the cylindrical cavity is 191, a plane constituted by a center line of a group of electrochemical cells on adjacent radiation lines and the center line of the cylindrical cavity is 192, and an included angle between 191 and 192 is an included angle 19. Because each group of electrochemical cells are evenly distributed around a center line of the support pole, the included angle 19 is 22.5°, and a sum of these included angles 16 is 360°.

In a possible embodiment, n layers of pole-mounted power supplies may be arranged based on an actual power consumption requirement with reference to a form in (b) in FIG. 3. In this case, it may be understood that a sum of included angles 16 of all the pole-mounted power supplies is n times 360°, where n is an integer greater than or equal to 1.

Similarly, such a ring-shaped columnar pole-mounted power supply may also be divided into two semi-circular columnar structures (not shown in the figure), and the two semi-circular columnar structures may be opened and closed based on the movable hinge 5. When the two semi-circular columnar structures are closed, the adjustable fastening structure 6 is configured to lock the pole-mounted power supply. For a specific implementation, refer to related descriptions in the embodiment in FIG. 7. Details are not described herein again.

It may be understood that, in addition to these electrochemical cells 3, other conventional power auxiliary components such as a BMS, a busbar, a heating film, and a necessary reinforcing piece are arranged in the annular tank 1 in this embodiment of the present invention. These power auxiliary components are located between the electrochemical cells, or located on an upper part of the electrochemical cell, or located on a lower part of the electrochemical cell, or located on a surface of the electrochemical cell. In addition, it may be further understood that an angle steel 8, a fastening stud 9, and the like may be further disposed outside the annular tank 1, and this is not specifically limited herein.

It should be noted that the foregoing embodiments are merely used to explain, not to limit, possible implementation solutions of the embodiments of the present invention. In actual application, a power supply structure, an electrochemical cell arrangement manner, and the like may be accordingly deformed and combined based on an idea of a technical solution of the present invention.

For example, in a possible deformation, in the embodiment shown in FIG. 8, the electrochemical cells 14 may be arranged in a uniformly spiral rising manner along a direction of the center line of the cylindrical cavity 20. In this way, a sum of included angles 16 of all pole-mounted power supplies may be m times 360°, where m is an integer greater than 1.

For another example, the pole-mounted power supply may include a plurality of layers of annular tanks, and each layer of annular tank may be separately combined and designed by using any one of the embodiments in FIG. 6, FIG. 8, and FIG. 9 and other variant embodiments. Such a combination manner also falls within the protection scope of the present invention.

In addition, it should be further noted that, although the centers of gravity of the plurality of electrochemical cells described in the embodiments of the present invention are evenly distributed around the center line of the cylindrical cavity, in a possible embodiment, in addition to the evenly distributed electrochemical cells in the annular tank of the pole-mounted power supply, it is also possible to dispose a few non-evenly distributed electrochemical cells based on a requirement. In this case, the center of gravity of the pole-mounted power supply can still be located inside the support pole.

It can be learned that, in the embodiments of the present invention, the pole-mounted power supply is designed as the annular tank having the cylindrical cavity at the center, so that the pole-mounted power supply can encircle the support pole after being mounted on the support pole. In addition, because the plurality of electrochemical cells of the pole-mounted power supply may be evenly arranged in the annular tank in a plurality of deployment manners, the center of gravity of the pole-mounted power supply can be located on the cross section (even the center) of the support pole. Therefore, through implementation of the embodiments of the present invention, stability of the pole-mounted power supply can be improved, and impact from severe weather is avoided. In addition, because the electrochemical cells are evenly distributed, surrounding environments of all the electrochemical cells are basically consistent, and working temperature is also consistent, so that it is ensured that temperature between the electrochemical cells is consistent, in other words, heat dissipation situations of all the electrochemical cells are basically consistent, thereby avoiding a problem of local overheating caused by inconsistent heat dissipation between the electrochemical cells, and prolonging a service life of the pole-mounted power supply. In addition, it can be learned from the plurality of deployment manners of the electrochemical cells described above that the pole-mounted power supply provided in the embodiments of the present invention has relatively strong expandability, can be widely applicable to an application scenario with increasing requirements for an electric quantity such as a 5G scenario, and has relatively strong applicability.

In the foregoing embodiments, the description of each embodiment has respective focuses. For a part that is not described in detail in an embodiment, refer to related descriptions in other embodiments.

The foregoing descriptions are specific embodiments of the present application, but are not intended to limit the protection scope of the present application. Any modification or replacement readily figured out by a person skilled in the art within the technical scope disclosed in the present application shall fall within the protection scope of the present application. Therefore, the protection scope of this application shall be subject to the protection scope of the claims.

## Claims

1. A pole-mounted power supply, comprising an annular tank configured to be mounted on a support pole, wherein there is a cylindrical cavity at a center of the annular tank, the cylindrical cavity is configured to encircle the support pole, the annular tank comprises a plurality of evenly distributed electrochemical cells, and a center of gravity of the pole-mounted power supply is located inside the support pole when the pole-mounted power supply is mounted on the support pole.

2. The pole-mounted power supply according to claim 1, wherein that a center of gravity of the pole-mounted power supply is located inside the support pole when the pole-mounted power supply is mounted on the support pole is specifically:
the support pole is vertically disposed on the ground, and the center of gravity of the pole-mounted power supply is located on a cross section of the support pole when the pole-mounted power supply is mounted on the support pole, wherein the cross section is located inside the support pole, and the cross section is perpendicular to a center line of the cylindrical cavity.

3. The pole-mounted power supply according to claim 1 or 2, wherein that a plurality of electrochemical cells are evenly disposed in the annular tank is specifically:
in the annular tank, centers of gravity of the plurality of electrochemical cells are all evenly distributed around the center line of the cylindrical cavity.

4. The pole-mounted power supply according to claim 3, wherein that centers of gravity of the plurality of electrochemical cells are evenly distributed around the center line of the cylindrical cavity is specifically:
the plurality of electrochemical cells are radially distributed around the center line of the cylindrical cavity.

5. The pole-mounted power supply according to claim 4, wherein the electrochemical cell is a square electrochemical cell or a soft-package electrochemical cell, a maximum cross section of the electrochemical cell is coplanar with the center line of the cylindrical cavity, and a sum of included angles between respective maximum cross sections of adjacent electrochemical cells is an integer multiple of 360 degrees.

6. The pole-mounted power supply according to claim 3, wherein that centers of gravity of the plurality of electrochemical cells are evenly distributed around the center line of the cylindrical cavity is specifically:
the plurality of electrochemical cells are distributed around the center line of the cylindrical cavity in a rotary or helical manner.

7. The pole-mounted power supply according to claim 6, wherein the electrochemical cell is a square electrochemical cell or a soft-package electrochemical cell, a maximum cross section of the electrochemical cell is not coplanar with the center line of the cylindrical cavity, and a sum of included angles between respective maximum cross sections of adjacent electrochemical cells is an integer multiple of 360 degrees.

8. The pole-mounted power supply according to claim 3, wherein the electrochemical cell is a cylindrical electrochemical cell, a center line of the cylindrical electrochemical cell is parallel to the center line of the cylindrical cavity, and a sum of included angles between planes constituted by the center line of the cylindrical cavity and respective center lines of adjacent electrochemical cells is an integer multiple of 360 degrees.

9. The pole-mounted power supply according to any one of claims 1 to 8, wherein that the cylindrical cavity is configured to encircle the support pole includes:
when the pole-mounted power supply is mounted on the support pole, a radius of the cylindrical cavity is equal to a radius of a mounting position of the support pole, to encircle and clamp the support pole.

10. The pole-mounted power supply according to any one of claims 1 to 9, wherein that the center of gravity of the pole-mounted power supply is located on a cross section of the support pole when the pole-mounted power supply is mounted on the support pole is specifically:
the center of gravity of the pole-mounted power supply is located at a center of the cross section of the support pole when the pole-mounted power supply is mounted on the support pole.

11. The pole-mounted power supply according to any one of claims 1 to 10, wherein the annular tank is divided into two semi-circular columnar structures, a movable hinge is disposed at a first junction of the two semi-circular columnar structures, and the two semi-circular columnar structures are movably connected by using the movable hinge.

12. The pole-mounted power supply according to claim 11, wherein an adjustable fastening structure is disposed at a second junction of the two semi-circular columnar structures, and when the two semi-circular columnar structures are closed into the annular tank by using the movable hinge, the adjustable fastening structure is configured to lock the annular tank.

13. The pole-mounted power supply according to claim 11 or 12, wherein at least one angle steel is disposed on each of a top edge and a bottom edge of each semi-circular columnar structure; one end of the angle steel is fixedly connected to a semi-circular columnar structure in which the angle steel is located, and the other end is configured to be in close contact with the support pole; and angle steels respectively disposed on the two semi-circular columnar structures are connected by using a fastening stud, to mount the pole-mounted power supply on the support pole.

14. The pole-mounted power supply according to any one of claims 1 to 13, wherein the electrochemical cell further comprises an electrochemical cell tab, and there is a soft connection between electrochemical cell tabs of adjacent electrochemical cells near the movable hinge.

15. The pole-mounted power supply according to any one of claims 1 to 14, wherein the pole-mounted power supply further comprises a power management system BMS, a busbar, and a heating film, and the BMS, the busbar, and the heating film are disposed inside the annular tank.
